# EUROPEAN PATENT APPLICATION

(11) **EP 2 755 118 A1**
(43) Date of publication of application: **16.07.2014**
(21) Application number: 14150134.6
(22) Date of filing: 03.01.2014
(51) Int. Cl.: G06F 3/048, G06Q 30/02, H04W 4/02, H04M 1/725

(54) **Method and mobile device for providing recommended items based on context awareness**

(30) Priority: 11.01.2013 KR 20130003579
(71) Applicant: Samsung Electronics Co., Ltd, Gyeonggi-do 443-742 (KR)
(72) Inventor: Joo, Jong-Sung, 443-742 Gyeonggi-do (KR); Watanabe, Masato, Yokohama-shi, Kanagawa 2300027 (JP); Kwon, Joong-Hun, 443-742 Gyeonggi-do (KR); Yang, Hui-Chul, 443-742 Gyeonggi-do (KR); Yang, Ji-Eun, 443-742 Gyeonggi-do (KR); Won, Sung-Joon, 443-742 Gyeonggi-do (KR); Jegal, Yun, 443-742 Gyeonggi-do (KR); Jang, Chul-Ho, 443-742 Gyeonggi-do (KR)
(74) Representative: Jenkins, Richard Gavin

(57) **Abstract**

A method and mobile device for providing recommended items based on context awareness are provided. In the method, it is determined whether an event satisfying at least one predetermined condition has been generated, recommended items customized to the event are generated, and a first window is displayed in an area according to a predetermined layout, the first window including the recommended items and a notification indicating that the items are recommended according to a context of the event generation.

## Description

### BACKGROUND OF THE INVENTION

### 1. Field of the Invention:

The present invention relates to an apparatus and method for providing a context awareness service. More particularly, the present invention relates to an apparatus and method for providing a context awareness service in which service contents are determined according to context information in a mobile device.

### 2. Description of the Related Art:

A touch screen is configured by combining a touch panel with a display device. Due to its advantage of convenient input of a user command without the need for a keyboard or a mouse as well as image display, the touch screen is widely used in various electronic devices including a mobile device, a navigator, a TeleVision (TV), an Automatic Teller Machine (ATM) of a bank, a Point Of Sale (POS) device in a shop, etc. For example, as a mobile device provides more and more services and additional functions, the mobile device displays Graphic User Interfaces (GUIs) on a touch screen. To increase the utilization of the mobile device and satisfy various users' demands, a variety of applications are under development for execution in the mobile device.

For example, a location-based service was introduced, in which when a user requests information about the current location of the user using the user's mobile device, that is, information about the current location of the mobile device to find out what additional information is available at the current location, the additional information is provided to the user based on the location information. For this purpose, the mobile device can provide an intelligent service by acquiring information about a physical location from an internal Global Positioning System (GPS) module and notifying the user of connectable services within a predetermined range based on the location information. Although such a GPS information-based service enables use of various regional services in the mobile device, the user may have difficulty in searching for a service suitable for the user due to a limited display size and limitations of GUIs in case there are many regional services available to the user.

Moreover, at least tens to hundreds of applications are stored in a recent mobile device such as a smartphone or a tablet Personal Computer (PC), and shortcut keys are displayed as icons for executing the individual applications on the touch screen of the mobile device. Thus, the user can execute an intended application in the mobile device by touching an icon representing the application on the touch screen. Besides the shortcut keys, many other visual objects such as widgets, pictures, and documents are displayed on the touch screen of the mobile device.

While various applications are provided to stimulate consumers' interest and satisfy their demands in the mobile device, the increase of applications available to the mobile device causes a problem. Specifically, too many applications are stored in the mobile device and a very limited number of icons can be displayed on a small-size screen of the mobile device. The user should search lists of applications one by one to find an intended application from among a large number of applications, which takes a lot of time. Accordingly, it is necessary to sort and organize a large number of visual objects that can be displayed on the screen in view of the limited space of the screen.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for providing recommended items based on context awareness in a mobile device.

Another aspect of the present invention is to provide an apparatus and method for enabling a user to readily identify a context in which items are recommended, when recommended items are provided based on a current context in a mobile device.

A further aspect of the present invention is to provide an apparatus and method for providing various recommended items based on a location, a time, sensor data, content, etc. in a mobile device.

In accordance with an aspect of the present invention, a method for providing recommended items based on a context awareness result in a mobile device is provided. In the method, it is determined whether an event satisfying at least one predetermined condition has been generated, recommended items customized to the event are generated, and a first window is displayed in an area according to a predetermined layout, the first window including the recommended items and a notification indicating that the items are recommended according to a context of the event generation.

In accordance with another aspect of the present invention, a mobile device for providing recommended items based on a context awareness result is provided. In the method, a memory configured to store at least one predetermined condition for use in determining whether an event has been generated, a controller configured to, upon generation of an event satisfying the at least one condition, generate recommended items customized to the event and control to display a first window in an area according to a predetermined layout, the first window including the recommended items and a notification indicating that the items are recommended according to a context of the event generation, and a display configured to display the first window.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a block diagram of a mobile device according to an exemplary embodiment of the present invention;
FIG. 2 is a front perspective view of a mobile device according to an exemplary embodiment of the present invention;
FIG. 3 is a rear perspective view of a mobile device according to an exemplary embodiment of the present invention;
FIG. 4 is a block diagram of a structure for providing a context awareness service in a mobile device according to an exemplary embodiment of the present invention;
FIG. 5 is a flowchart illustrating a method for providing a context awareness service in a mobile device according to an exemplary embodiment of the present invention;
FIGS. 6A to 6C illustrate a method for laying out areas that display customized recommended items in a mobile device according to an exemplary embodiment of the present invention;
FIGS. 7A and 7B illustrate an exemplary main screen according to an exemplary embodiment of the present invention;
FIGS. 8A to 8D illustrate an exemplary event-area screen according to an exemplary embodiment of the present invention;
FIGS. 9A to 9D illustrate an exemplary profile-area screen according to an exemplary embodiment of the present invention;
FIG. 10 illustrates an exemplary configuration of an event area, when an all-share device is detected according to an exemplary embodiment of the present invention;
FIG. 11 illustrates an exemplary configuration of an event area during content reproduction according to an exemplary embodiment of the present invention;
FIG. 12 illustrates an exemplary configuration of a location-based event area according to an exemplary embodiment of the present invention; and
FIG. 13 illustrates an exemplary configuration of a user log-based event area according to an exemplary embodiment of the present invention.

Throughout the drawings, it should be noted that like reference numbers are used to depict the same elements, features and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

While ordinal numbers like first, second, etc. can be used to describe a number of components, these components are not limited by the terms. The terms are used to distinguish one component from other components. For example, a first component may be referred to as a second component or vice versa within the scope and spirit of the present invention. The technical terms used in the present invention are provided simply to describe specific exemplary embodiments, not intended to restrict the present invention. Herein, singular expressions include plural expressions unless otherwise clarified in the context.

While the following description is given of exemplary embodiments of the present invention in the context of a hand-held mobile device, this is purely exemplary. Thus, it should be understood that a method for providing recommended items based on context awareness in a mobile device according to the present disclosure can be applied to various electronic devices equipped with a touch screen, such as a navigator, a TeleVision (TV), an Automatic Teller Machine (ATM) of a bank, a Point Of Sale (POS) device of a shop, etc. as well as mobile devices such as a portable phone, a smart phone, a tablet Personal Computer (PC), etc.

If the mobile device provides various visual objects that are sorted according to a current user context based on user context information, it can provide various context awareness services to the user. However, the context awareness services also need to be provided, taking into account the limitations of the display screen in the mobile device.

Accordingly, the present disclosure provides a method for providing recommended items based on context awareness in a mobile device. The present disclosure is characterized in that upon generation of an event satisfying at least one triggering condition such as a predetermined time, a predetermined location, predetermined sensor data, and/or predetermined content, recommended items customized to the event are generated and a window with the customized recommended items and a notification indicating the context of recommending the items is displayed. Therefore, a user can readily identify a current context by determining why the items have been recommended and can receive a service or set a function suitable for the context of the mobile device, as well. Consequently, the user can advantageously receive various context awareness services.

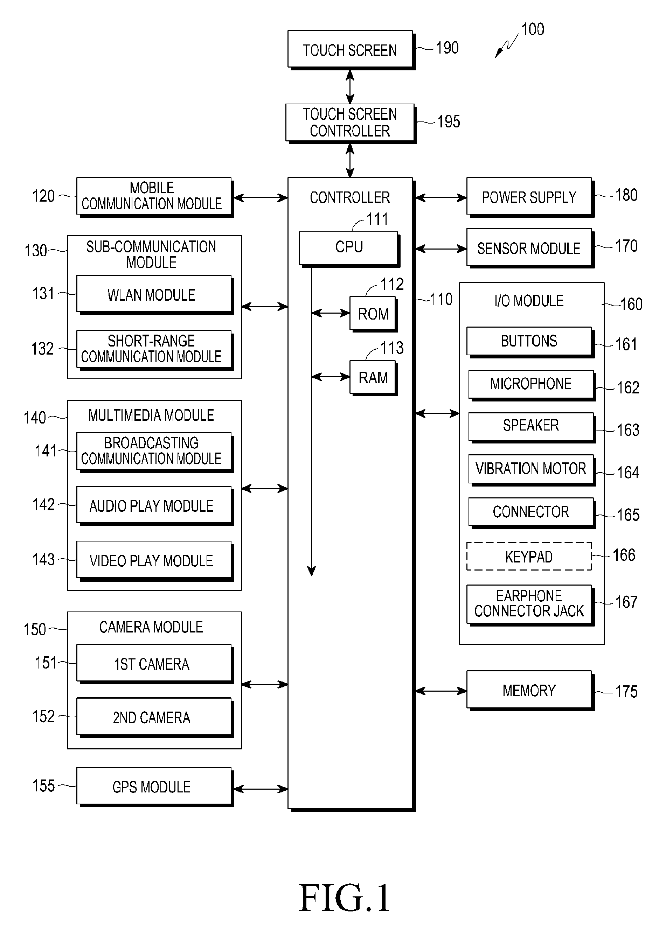

FIG. 1 is a block diagram of a mobile device according to an exemplary embodiment of the present invention.

Referring to FIG. 1, a mobile device 100 may be connected to an external device (not shown) through an external device interface such as a sub-communication module 130, a connector 165, and an earphone connector jack 167. The term 'external device' covers a variety of devices that can be detachably connected to the mobile device 100 by wire, such as an earphone, an external speaker, a Universal Serial Bus (USB) memory, a charger, a cradle, a docking station, a Digital Multimedia Broadcasting (DMB) antenna, a mobile payment device, a health care device (e.g., a blood sugar meter, etc.), a game console, a vehicle navigator, etc. The 'external device' may also include a device wirelessly connectable to the mobile device 100 by short-range communication, such as a Bluetooth communication device, a Near Field Communication (NFC) device, a Wireless Fidelity (WiFi) Direct communication device, and a wireless Access Point (AP). In addition, the external device may be any of another mobile device, a portable phone, a smart phone, a tablet PC, a desktop PC, and a server.

The mobile device 100 includes a touch screen 190 and a touch screen controller 195. The mobile device 100 further includes a controller 110, a mobile communication module 120, the sub-communication module 130, a multimedia module 140, a camera module 150, a Global Positioning System (GPS) module 155, an Input/Output (I/O) module 160, a sensor module 170, a memory 175, and a power supply 180. The sub-communication module 130 includes at least one of a Wireless Local Area Network (WLAN) module 131 and a short-range communication module 132, and the multimedia module 140 includes at least one of a broadcasting communication module 141, an audio play module 142, and a video play module 143. The camera module 150 includes at least one of a first camera 151 and a second camera 152, and the I/O module 160 includes at least one of buttons 161, a microphone 162, a speaker 163, a vibration motor 164, the connector 165, and a keypad 166. The following description is given with the appreciation that the touch screen 190 and the touch screen controller 195 are a display and a display controller, respectively, by way of example.

The controller 110 may include a Central Processing Unit (CPU) 111, a Read Only Memory (ROM) 112 for storing a control program to control the mobile device 100, and a Random Access Memory (RAM) 113 for storing signals or data received from the outside of the mobile device 100 or for use as a memory space for an operation performed by the mobile device 100. The CPU 111 may include a single core, dual cores, triple cores, or quad cores. The CPU 111, the ROM 112, and the RAM 113 may be connected to one another through an internal bus.

The controller 110 may control the mobile communication module 120, the sub-communication module 130, the multimedia module 140, the camera module 150, the GPS module 155, the I/O module 160, the sensor module 170, the memory 175, the power supply 180, the touch screen 190, and the touch screen controller 195. The controller 110 provides overall control to the mobile device 100 and an operation of the controller 110 according to an exemplary embodiment of the present invention will be described further below.

The mobile communication module 120 connects the mobile device 100 to an external device through one or more antennas (not shown) by mobile communication under the control of the controller 110. The mobile communication module 120 transmits wireless signals to or receives wireless signals from a portable phone (not shown), a smart phone (not shown), a tablet PC (not shown), or another mobile device (not shown) that has a phone number input to the mobile device 100, for voice call, video call, Short Message Service (SMS), or Multimedia Messaging Service (MMS).

The sub-communication module 130 may include at least one of the WLAN module 131 and the short-range communication module 132. For example, the sub-communication module 130 may include at least one of the WLAN module 131 and the short-range communication module 132.

The WLAN module 131 may be connected to the Internet under the control of the controller 110 in a place where a wireless Access Point (AP) (not shown) is installed. The WLAN module 131 supports the WLAN standard IEEE802.11x of the Institute of Electrical and Electronics Engineers (IEEE). The short-range communication module 132 may conduct short-range wireless communication between the mobile device 100 and an image forming device (not shown) under the control of the controller 110. The short-range communication may conform to Bluetooth, Infrared Data Association (IrDA), WiFi Direct, NFC, etc.

The mobile device 100 may include at least one of the mobile communication module 120, the WLAN module 131, and the short-range communication module 132 according to its capabilities. For example, the mobile device 100 may include a combination of the mobile communication module 120, the WLAN module 131, and the short-range communication module 132 according to its capabilities.

The multimedia module 140 may include the broadcasting communication module 141, the audio play module 142, or the video play module 143. The broadcasting communication module 141 may receive a broadcast signal (for example, a TV broadcast signal, a radio broadcast signal, or a data broadcast signal) and additional broadcasting information (for example, an Electronic Program Guide (EPG) or Electronic Service Guide (ESG)) from a broadcasting station through a broadcasting communication antenna (not shown) under the control of the controller 110. The audio play module 142 may play a stored or received digital audio file (for example, a file having such an extension as mp3, wma, ogg, or wav) under the control of the controller 110. The video play module 143 may play a stored or received digital video file (for example, a file having such an extension as mpeg, mpg, mp4, avi, mov, or mkv) under the control of the controller 110. The video play module 143 may also play a digital audio file.

The multimedia module 140 may include the audio play module 142 and the video play module 143 without the broadcasting communication module 141. Or the audio play module 142 or the video play module 143 of the multimedia module 140 may be incorporated into the controller 110.

The camera module 150 may include at least one of the first camera 151 and the second camera 152, for capturing a still image or a video under the control of the controller 110. Further, the first camera 151 or the second camera 152 may include an auxiliary light source (for example, a flash (not shown)) for providing a light intensity required for capturing an image. The first camera 151 may be disposed on the front surface of the mobile device 100, while the second camera 152 may be disposed on the rear surface of the device 100. Or the first camera 151 and the second camera 152 may be arranged near to each other (for example, the distance between the first camera 151 and the second camera 152 is between 1 cm and 8cm) in order to capture a three-dimensional still image or video.

The GPS module 155 may receive signal waves from a plurality of GPS satellites (not shown) in Earth orbit and calculate a position of the mobile device 100 based on the Time of Arrivals (ToAs) of satellite signals from the GPS satellites to the mobile device 100.

The I/O module 160 may include at least one of a plurality of buttons 161, the microphone 162, the speaker 163, the vibration motor 164, the connector 165, and the keypad 166.

The buttons 161 may be formed on the front surface, a side surface, or the rear surface of a housing of the mobile device 100, and may include at least one of a power/lock button (not shown), a volume button (not shown), a menu button, a home button, a back button, and a search button.

The microphone 162 receives voice or sound and converts the received voice or sound to an electrical signal under the control of the controller 110.

The speaker 163 may output sounds corresponding to various signals (for example, a wireless signal, a broadcast signal, a digital audio file, a digital video file, a photo shot, etc.) received from the mobile communication module 120, the sub-communication module 130, the multimedia module 140, and the camera module 150 to the outside of the mobile device 100. The speaker 163 may output sounds corresponding to functions (for example, a button manipulation sound or a ringback tone for a call) performed by the mobile device 100. One or more speakers 163 may be disposed at an appropriate position or positions of the housing of the mobile device 100.

The vibration motor 164 may convert an electrical signal to a mechanical vibration under the control of the controller 110. For example, when the mobile device 100 receives an incoming voice call from another mobile device (not shown) in vibration mode, the vibration motor 164 operates. One or more vibration motors 164 may be mounted inside the housing of the mobile device 100. The vibration motor 164 may operate in response to a user's touch on the touch screen 190 and a continuous movement of the touch on the touch screen 190.

The connector 165 may be used as an interface for connecting the mobile device 100 to an external device (not shown) or a power source (not shown). The connector 165 may transmit data stored in the memory 175 to the external device via a cable connected to the connector 165 or may receive data from the external device via the cable, under the control of the controller 110. The external device may be a docking station and the data may be a signal received from an external input device, for example, a mouse or a keyboard. The mobile device 100 may receive power or charge a battery (not shown) from the power source via the cable connected to the connector 165.

The keypad 166 may receive a key input from the user to control the mobile device 100. The keypad 166 includes a physical keypad (not shown) formed in the mobile device 100 or a virtual keypad (not shown) displayed on the display 190. The physical keypad may not be provided according to the capabilities or configuration of the mobile device 100.

An earphone (not shown) may be inserted into the earphone connector jack 167 and thus connected to the mobile device 100.

The sensor module 170 includes at least one sensor for detecting a state of the mobile device 100. For example, the sensor module 170 may include a proximity sensor for detecting whether the user is close to the mobile device 100, an illuminance sensor (not shown) for detecting the amount of ambient light around the mobile device 100, a motion sensor (not shown) for detecting a motion of the mobile device 100 (for example, rotation, acceleration or vibration of the mobile device 100), a geomagnetic sensor (not shown) for detecting a point of the compass using the earth's magnetic field, a gravity sensor for detecting the direction of gravity, and an altimeter for detecting an altitude by measuring the air pressure. At least one sensor may detect a state of the mobile device 100, generate a signal corresponding to the detected state, and transmit the generated signal to the controller 110. A sensor may be added to or removed from the sensor module 170 according to the capabilities of the mobile device 100.

The memory 175 may store input/output signals or data in accordance with operations of the mobile communication module 120, the sub-communication module 130, the multimedia module 140, the camera module 150, the GPS module 155, the I/O module 160, the sensor module 170, and the touch screen 190 under the control of the controller 110. The memory 175 may store a control program for controlling the mobile device 100 or the controller 110, and applications. The memory 175 also stores user profile information and user log information representing the user's history of using the mobile device 100, that is, the user's use pattern of the mobile device 100.

In an exemplary embodiment of the present invention, the memory 175 stores triggering conditions for determining whether an event has been generated. That is, if a predetermined condition stored in the memory 175 is satisfied or an operation is performed, it is determined that an event has been generated. The determination is made based on at least one of the triggering conditions of a predetermined time, a predetermined location, reception of sensor data, and content execution. Specifically, the predetermined time as a triggering condition may be a user-set time, a time zone for sorting a list of frequently used applications, etc. The predetermined location as a triggering condition may be, for example, a user-registered place such as a home, an office, a car, a school, etc. or a public place such as a movie theater. The content execution as a triggering condition may be reproduction of content such as music, a video, etc., e-book reading, picture viewing, or execution of content such as an application. The sensor data as a triggering condition may be sensor data associated with a physical connection to an external device or a network connection.

The term "memory" is inclusive of the memory 175, the ROM 112 and the RAM 113 within the controller 110, or a memory card (not shown) (e.g. a Secure Digital (SD) card or a memory stick) mounted to the mobile device 100. The memory may include a non-volatile memory, a volatile memory, a Hard Disk Drive (HDD), or a Solid State Drive (SSD).

The power supply 180 may supply power to one or more batteries (not shown) mounted in the housing of the mobile device 100 under the control of the controller 110. The one or more batteries supply power to the mobile device 100. Further, the power supply 180 may supply power received from an external power source (not shown) via the cable connected to the connector 165 to the mobile device 100. The power supply 180 may also supply power received wirelessly from the external power source to the mobile device 100 by a wireless charging technology.

The touch screen 190 may provide User Interfaces (UIs) corresponding to various services (for example, call, data transmission, broadcasting, and photo taking) to the user. The touch screen 190 may transmit an analog signal corresponding to at least one touch on a UI to the touch screen controller 195. The touch screen 190 may receive at least one touch input through a user's body part (e.g., a finger) or a touch input tool (for example, a stylus pen). Also, the touch screen 190 may receive a touch input signal corresponding to a continuous movement of a touch among one or more touches. The touch screen 190 may transmit an analog signal corresponding to the continuous movement of the input touch to the touch screen controller 195.

In the present invention, 'touch' may include a non-contact touch (a detectable gap between the touch screen 190 and a user's body part or a touch input means is 1mm or below), not is not limited to contacts between the touch screen 190 and the user's body part or the touch input means. A gap detectable to the touch screen 190 may vary according to the capabilities or configuration of the mobile device 100.

The touch screen 190 may be implemented into, for example, a resistive type, a capacitive type, an ElectroMagnetic Resonance (EMR) type, an infrared type, or an acoustic wave type.

The touch screen controller 195 converts an analog signal received from the touch screen 190 to a digital signal (for example, X and Y coordinates). The controller 110 may control the touch screen 190 using the digital signal received from the touch screen controller 195. For example, the controller 110 may control selection or execution of a shortcut icon (not shown) displayed on the touch screen 190 in response to a touch. The touch screen controller 195 may be incorporated into the controller 110.

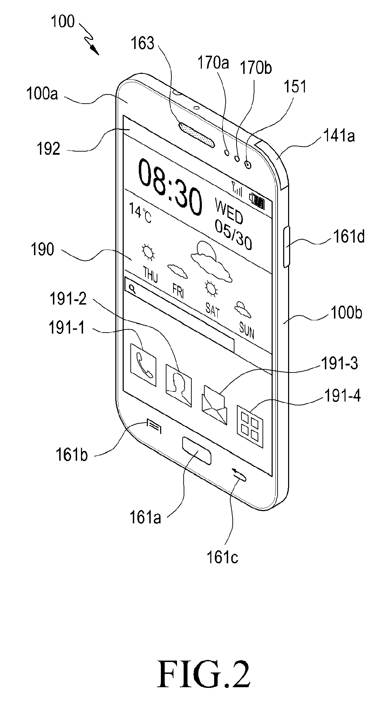

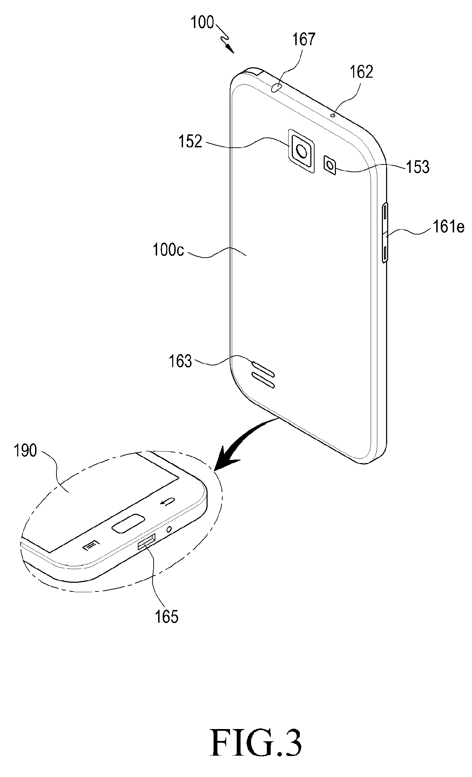

FIGS. 2 and 3 are front and rear perspective views of a mobile device respectively according to an exemplary embodiment of the present invention.

Referring to FIGS. 2 and 3, the touch screen 190 is disposed at the center of the front surface 100a of the mobile device 100, occupying almost the entire area of the front surface 100a. In FIG. 2, a main home screen is displayed on the touch screen 190, by way of example. The main home screen is the first screen to be displayed on the touch screen 190, when the mobile device 100 is powered on. In the case where the mobile device 100 has different home screens of a plurality of pages, the main home screen may be the first of the home screens of the plurality of pages. Shortcut icons 191-1, 191-2 and 191-3 for executing frequently used applications, a main menu switch key 191-4, time, weather, etc. may be displayed on the home screen. The main menu switch key 191-4 is used to display a menu screen on the touch screen 190. A status bar 192 may be displayed at the top of the touch screen 190 in order to indicate states of the mobile device 100 such as a battery charged state, a received signal strength, and a current time.

A home button 161a, a menu button 161b, and a back button 161 c may be formed at the bottom of the touch screen 190.

The home button 161a is used to display the main home screen on the touch screen 190. For example, upon touching of the home button 161a while any home screen other than the main home screen or a menu screen is displayed on the touch screen 190, the main home screen may be displayed on the touch screen 190. Upon touching of the home button 161a during execution of applications on the touch screen 190, the main home screen illustrated in FIG. 2 may be displayed on the touch screen 190. The home button 161a may also be used to display recently used applications or a task manager on the touch screen 190.

The menu button 161b provides link menus available on the touch screen 190. The link menus may include a widget adding menu, a background changing menu, a search menu, an edit menu, an environment setting menu, etc.

The back button 161c may display the screen previous to a current screen or end the latest used application.

The first camera 151, an illuminance sensor 170a, and a proximity sensor 170b may be arranged at a corner of the front surface 100a of the mobile device 100, whereas the second camera 152, a flash 153, and the speaker 163 may be arranged on the rear surface 100c of the mobile device 100.

For example, a power/reset button 161d, a volume button 161e, a terrestrial DMB antenna 141a for receiving a broadcast signal, and one or more microphones 162 may be disposed on side surfaces 100b of the mobile device 100. The DMB antenna 141a may be mounted to the mobile device 100 fixedly or detachably.

The connector 165 is formed on the bottom side surface of the mobile device 100. The connector 165 may include a plurality of electrodes and may be connected to an external device by wire. The earphone connector jack 167 may be formed on the top side surface of the mobile device 100, for allowing an earphone to be inserted.

In an exemplary embodiment of the present invention, the controller 110 initially repeats learning to build user log learning data in the memory 175 so that optimum recommended items may be classified according to user contexts. For this purpose, the controller 110 controls an operation for accumulating user log data that is generated as the user uses applications in the mobile device 100. Before the user log data is accumulated, the controller 110 controls to generate a window using a user profile. The window displays user profile-based recommended items and a notification indicating that the items are recommended based on the user profile.

Upon generation of an event, the controller 110 controls to display a window with recommended items customized to the event in an area of a predetermined layout. When a predetermined condition stored in the memory 175 is satisfied or an operation is performed, the controller 110 determines that an event has been generated, searches for recommended items associated with the event, and generates a window including the recommended items and a notification indicating that the items are recommended according to the context of the event generation. The recommended items include at least one of an application, a media, a task, regional information, state information about the mobile device 100, and information about an acquaintance. When windows are displayed, the event-based window has priority over the profile-based window. A method for displaying windows will be described below.

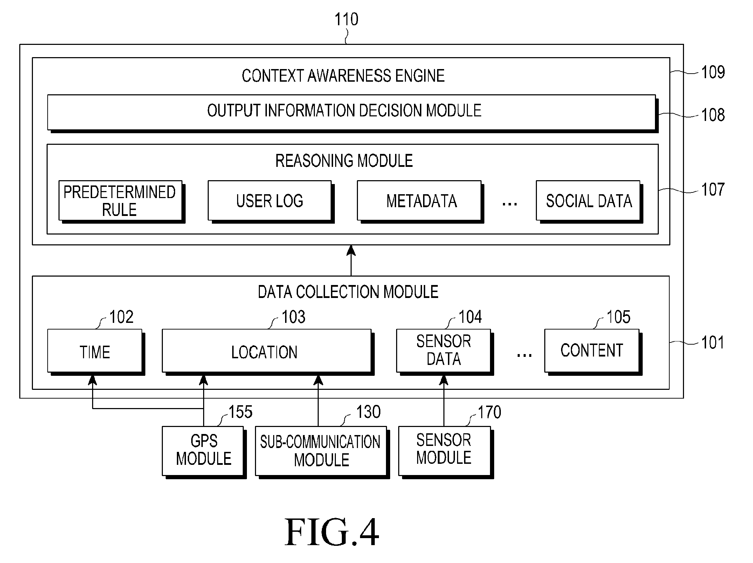

An algorithm for providing recommended items based on context awareness according to an exemplary embodiment of the present invention may be implemented on a single chip. In this case, the algorithm may be realized in the controller 110, as illustrated in FIG. 4.

FIG. 4 is a block diagram of a structure for providing a context awareness service in a mobile device according to an exemplary embodiment of the present invention.

Referring to FIG. 4, the controller 110 includes a data collection module 101 for acquiring data for use in context reasoning, processing the data, and managing the processed data in an integrated manner, and a context awareness engine 109 for analyzing and assessing a user's current context using the data and determining items to be recommended in regard to the current context. The context awareness engine 109 may include a reasoning module 107 for reasoning a context from the data and an output information decision module 108 for generating recommended items based on the reasoned current context. The reasoning module 107 of the context awareness engine 109 operates based on a context awareness algorithm.

According to the exemplary embodiments of the present invention, if location information 103 received from the GPS module 155 or the sub-communication module 130, time information 102 received from the GPS module 155, sensor data 104 received from the sensor module 170, and content execution information 105 regarding use of an application, etc. are used for context awareness, the use pattern of the mobile device 100 may be predicted based on a current time and content as well as a location. Therefore, the mobile device 100 may provide a context awareness service based on a location, a current time, and content.

The reasoning module 107 may reason a context in a predetermined rule. Besides, the reasoning module 107 may reason a context using a user log, metadata included in content, social data generated by using a subscribed social network, etc.

The output information decision module 108 determines customized recommended items including at least one of an application, a media, a task, regional information, state information about the mobile device 100, and information about an acquaintance based on the reasoned context. The recommended items may be searched for in the memory 175 or downloaded from an external server.

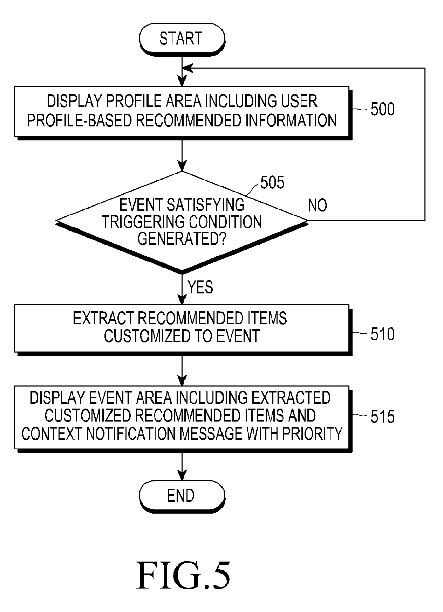

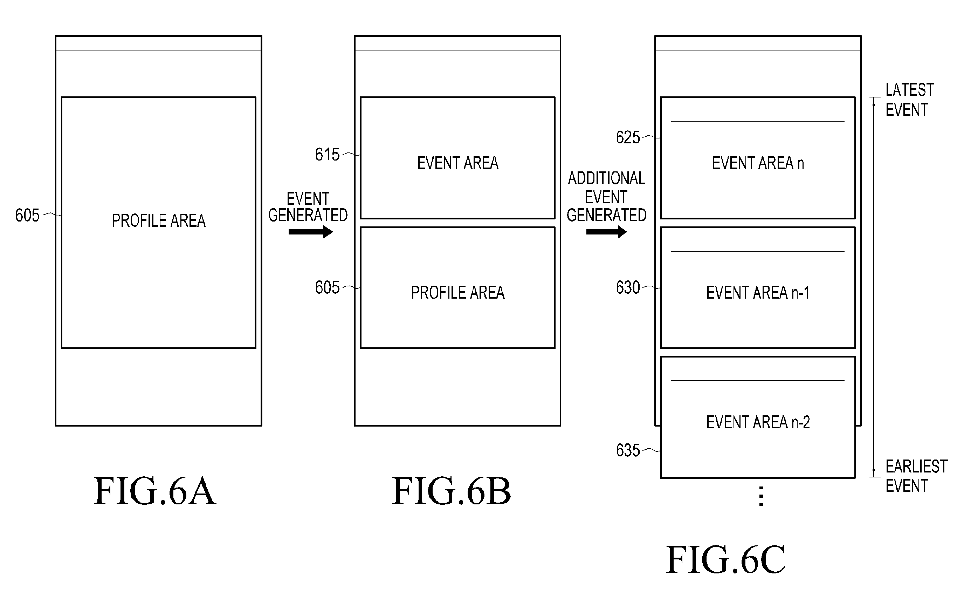

FIG. 5 is a flowchart illustrating a method for providing a context awareness service in a mobile device according to an exemplary embodiment of the present invention. For helping with the understanding of FIG. 5, the method for providing a context awareness service in the mobile device will be described with reference to FIGS. 6A to 7B.

Referring to FIG. 5, upon receipt of a request for displaying recommended items from a user, the controller 110 controls to display a profile area including user profile-based recommended information on the touch screen 190 in step 500. The user may request displaying of recommended items by selecting a shortcut key displayed in the form of an icon for execution of an application on a locked screen or a home screen. The application for requesting displaying of recommended items may be displayed as a widget on a menu screen. Upon generation of an event, a notification message indicating occurrence of the event may be displayed. When the notification message is selected, it may also be determined that the request for displaying recommended items has been issued.

FIGS. 6A to 6C illustrate a method for laying out areas that display customized recommended items in a mobile device according to an exemplary embodiment of the present invention.

FIG. 6A illustrates an exemplary screen that displays a profile area with user profile-based recommended information. In the absence of accumulated user log information, user profile-based recommended items are displayed in a window 605 of a predetermined layout. In an exemplary embodiment of the present invention, the user profile-based window 605 is referred to as a profile area. The recommended items may include icons or buttons representing a title, an image, text, a picture, or a combination of them.

With the profile area displayed, the controller 110 monitors generation of an event satisfying a triggering condition in step 505. Upon generation of an event satisfying a triggering condition, the controller 110 extracts recommended items customized to the event in step 510 and displays an event area with priority, which includes the extracted customized recommended items and a notification indicating a current context of recommending the items in step 515.

FIG. 6B illustrates an exemplary screen that displays a profile area with user profile-based recommended items and an event area with event-based recommended items. The event-based recommended items and a context indicating notification are displayed in a window 615. In an exemplary embodiment of the present invention, the event-based window 615 is referred to as an event area. The event area 615 is displayed above the profile area 605. That is, the event area 615 has priority over the profile area 605 in terms of displaying.

If two or more events satisfying a triggering condition have occurred or another event has occurred in succession to a previous event, a plurality of areas should be displayed in the same space and thus should be prioritized. In an exemplary embodiment of the present invention, the order of displaying the areas may be determined according to the exposure logic of each area. For example, windows 625, 630 and 635 may be arranged successively in the order of latest to earliest events, as illustrated in FIG. 6C. Accordingly, when a plurality of areas is to be displayed on a main screen, they may be displayed without overlapping on the main screen.

For example, with the main screen divided into two halves, the first window 615 may be displayed in the upper half of the main screen and the second window 605 may be displayed in the lower half of the main screen, as illustrated in FIG. 6B. While the first and second windows 615 and 605 are adjacent to each other, sharing a common boundary, they do not overlap with each other. The common boundary is between the first and second windows 615 and 605. The event-based recommended items and the profile-based recommended items may be displayed respectively in the first and second windows 615 and 605. Upon generation of a new event, the event-based recommended items displayed in the first window 615 may be moved to a second window 630 under a first window 625 as illustrated in FIG. 6C. A third window 635 may be wholly or partially hidden by the new exposed first window 625 and the second window 630.

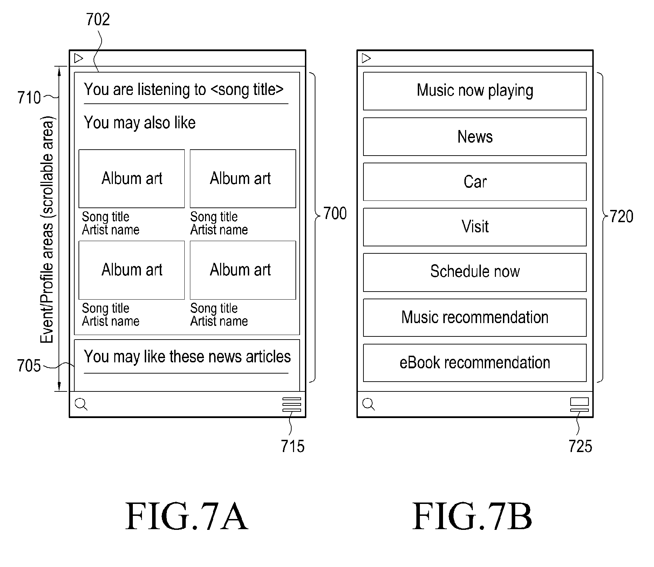

FIGS. 7A and 7B illustrate an exemplary main screen according to an exemplary embodiment of the present invention.

With reference to FIG. 7A, a layout for displaying a plurality of areas will be described. FIG.7A illustrates an exemplary screen that displays recommended items in a predetermined layout. Referring to FIG. 7A, a window area 700 is divided into first and second windows 702 and 705. A new exposed area is displayed in the first window 702, whereas a previous exposed area is displayed in the second window 705. The new exposed area 702 is disposed at the top of the window area 700. In the absence of a generated event, only a profile area may be displayed in the first window 702. Upon generation of an event, an event area is displayed in the first window 702.

While the areas are unfolded in FIG. 7B, the areas may be viewed in the form of an area list 720, upon selection of an icon 715 at the bottom of the window 700. If the user selects an icon 725 at the bottom in the area list 720, the areas are folded. The user may move between the areas 702 and 705 by scrolling. When a scroll input is received, the plurality of areas 702 and 705 are scrolled within a scrollable area 710.

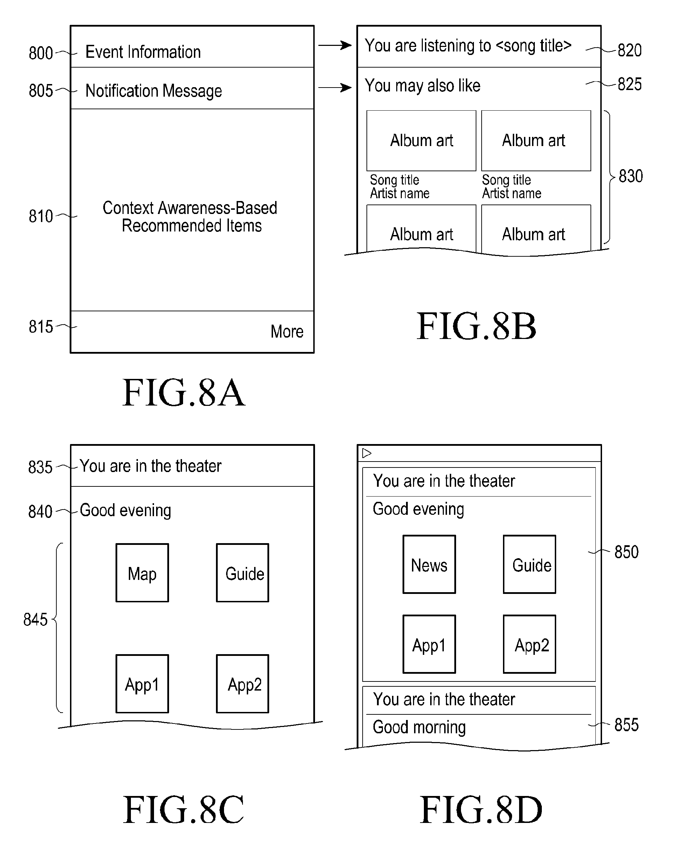

FIGS. 8A to 8D illustrate an exemplary event-area screen according to an exemplary embodiment of the present invention.

Now a description will be given of the configuration of each area in an event area with reference to FIGS. 8A to 8D. Referring to FIG. 8A, the event area may be divided into an event information display area 800, a notification message display area 805, a context awareness-based recommended items display area 810, and a menu display area 815. As illustrated in FIG. 8B, information 820 indicating a reason for providing recommended items is displayed in the form of a message or an image in the event information display area 800. For example, text indicating that content is being reproduced is displayed in FIG. 8B.

As illustrated in FIG. 8B, a recommended item guidance title 825 indicating, for example, the number of recommended items 830 and the context of recommending the items is displayed in the notification message display area 805. Since a notification message is output in the notification message display area 805 to indicate why the items are recommended, the user can be aware of the context of the item recommendation as well as view the recommended items 830. In addition, in the case of simultaneous event triggers of a scheduled notification and an earphone input, for example, the event information display area 800 and the notification message display area 805 may notify the user that items are recommended in view of the scheduled notification and the earphone input, thus helping the user with clear context awareness.

FIG. 8C illustrates an exemplary event area in the case of a multi-event situation in a specific time zone in a specific place. Referring to FIG. 8C, an event that the user is located in a specific registered place may be notified in an event information display area 835. A context notification indicating the specific time zone may be displayed in a notification message display area 840. Detected recommended items matching the time zone and the location are displayed in a context awareness-based recommended item display area 845. The recommended items may be detected based on a user log such as applications that the user frequently uses in the time zone in the location. Even though the user is located at the specific place, if the specific time zone is changed, a new event is generated. Then, a new event area 850 is displayed followed by an old event area 855 as illustrated in FIG. 8D. When a plurality of events has occurred in this manner, a main screen may be divided into a plurality of areas and thus an event area may be configured for each event. Alternatively, only one event area is displayed on the main screen and other event areas following the event area may be displayed by scrolling.

While event information and a notification message are separately displayed in the exemplary embodiment of the present invention, it is obvious that the event information and the notification message may be displayed in the same area. For example, a context notification may be provided to the user by text reflecting occurrence of multiple events such as "headset connected", "office", "good morning", etc. Displaying a user-friendly message along with recommended items enables an emotionally appealing recommendation.

As illustrated in FIG. 8B, recommended items 830 related to a current event are displayed in the context awareness-based recommended item display area 810. The recommended items 830 may include various event-related objects such as text, a figure, an icon, a button, a picture, a video, a Web, a map, etc. When the user touches one of the recommended items, an application corresponding to a function or event predetermined for the recommended item may be executed. The recommended items may be referred to as views according to an Operating System (OS). For example, a set of recommended items may be provided according to the current event information in the context awareness-based recommended item display area 810 and the number of the recommended items in the set may be determined according to the type of an area/content and recommendability. If there are more pieces of content recommendable than those able to be displayed in each area layout, a 'More' button may be displayed in the menu display area 815.

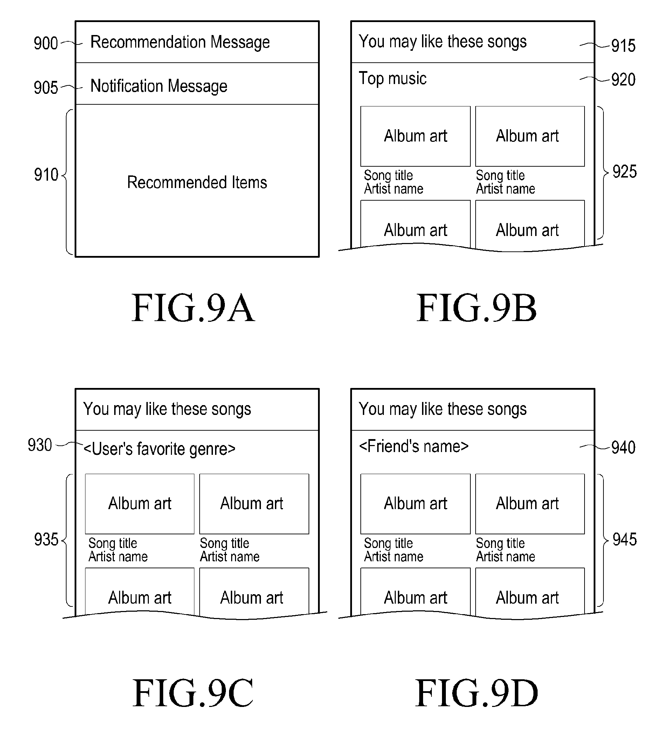

The configuration of each area of the profile area will be described with reference to FIGS. 9A to 9D.

FIGS. 9A to 9D illustrate an exemplary profile-area screen according to an exemplary embodiment of the present invention.

Referring to FIG. 9A, the profile area may be divided into a recommendation message display area 900, a notification message display area 905, and a recommended item display area 910, similarly to FIG. 8A. As illustrated in FIG. 9B, a recommendation message 915 such as "You may like these songs" is displayed in the recommendation message display area 900. The title 920 of recommended items such as top news, top music, popular songs, etc. are displayed in the notification message display area 905 as illustrated in FIG. 9B. The recommended items 925 such as recommended music content are displayed in the recommended item display area 910 as illustrated in FIG. 9B.

While a default profile area is shown in FIG. 9B due to the absence of a user profile, if user profile information is collected and the user agrees on using the user profile information, user profile-based recommended items may be displayed as illustrated in FIG. 9C. In this case, a message indicating user profile-based information may be displayed in a notification message display area 930 and user profile-based recommended items are displayed in a recommended item display area 935. In an exemplary embodiment of the present invention, if the user has subscribed to a social network, items recommending content registered or shared by a friend on the social network may be displayed in the profile area. An example of the profile area is illustrated in FIG. 9D. In FIG. 9D, a friend's name on the social network may be displayed in a notification message display area 940 and items recommending content registered or shared by the friend may be displayed in a recommended item display area 945.

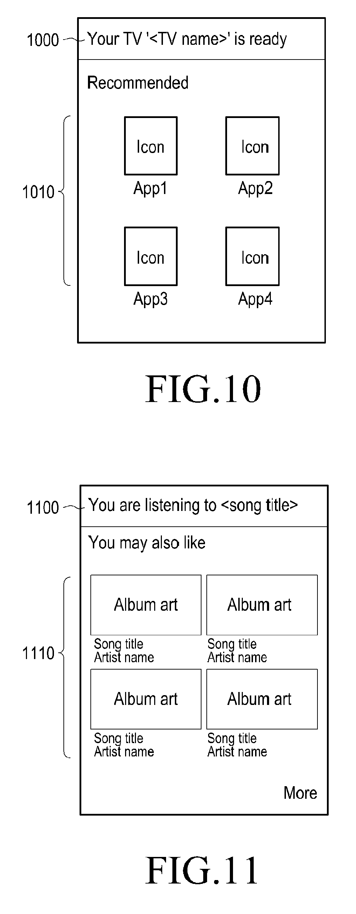

Exemplary configurations of an event area will be described below with reference to FIGS. 10 to 13.

FIG. 10 illustrates an exemplary event area, when an external device supporting an all-share function is detected according to an exemplary embodiment of the present invention.

For example, when the earphone connector jack 167 or the connector 165 of the mobile device 100 is inserted into the external device and thus electrodes within the mobile device 100 are connected to the external device, the controller 110 may sense the wired connection to the external device. If the mobile device 100 is connected to an external device through the sub-communication module 130 wirelessly by WLAN, Bluetooth, NFC, etc., the controller 110 may sense the wireless connection to the external device. In this case, the controller 110 extracts a list of customized applications available through the connected external device. The customized applications refer to applications that may use the connected external device, when the applications are executed in the mobile device 100.

Referring to FIG. 10, a detected external device is indicated as a TV in an event information display area 1000 and applications available through the TV are displayed as recommended items in a context awareness-based recommended item display area 1010. For example, the applications available through the TV may be a video player, a gallery, etc. Upon receipt of sensor data indicating that the external device has been detected through the sub-communication module 130, the controller 110 generates a window with applications available through the TV as recommended items customized to the connection to the external device, determining that an event has occurred.

FIG. 11 illustrates an exemplary event area during playing music according to an exemplary embodiment of the present invention.

Referring to FIG. 11, a message indicating that the user is listening to music may be displayed in an event information display area 1100 and recommended items 1110 related to the music may be displayed along with a context notification indicating that items are recommended in relation to the play of the music. The recommended items may be searched for and determined based on metadata included in the music content.

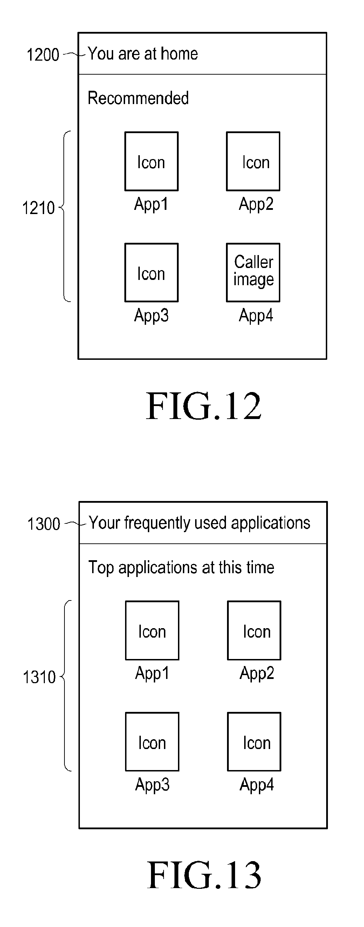

FIG. 12 illustrates an exemplary event area when a user is located in a registered place according to an exemplary embodiment of the present invention.

Referring to FIG. 12, the name of the user-registered place may be displayed in an event information display area 1200 and recommended items 1210 related to the place, for example, information about frequently used applications, frequently called parties, etc. may be displayed.

FIG. 13 illustrates an exemplary event area for applications frequently used in a specific time zone according to an exemplary embodiment of the present invention.

Referring to FIG. 13, if it is determined based on a user log that the specific time zone has come, a message indicating user's frequently used applications may be displayed in an event information display area 1300 and applications 1310 related to the specific time zone may be displayed as recommended items.

As is apparent from the above description, the exemplary embodiments of the present invention can advantageously provide a context awareness service by analyzing an event occurring to a mobile device in real time and displaying a screen with items customized to a current user's context based on the analysis result.

The exemplary embodiments of the present invention can also effectively provide a more accurate context awareness service as well as acquire reliable context reasoning results due to the use of a user profile, a user log, etc. in the mobile device.

Further, even upon occurrence of complex contexts satisfying two or more of the triggering conditions of a location, a time, sensor data, and content, the exemplary embodiments of the present invention displays recommended items customized to the complex contexts in various manners. Therefore, the user can readily identify the recommended items and get wide choices.

It will be understood that the exemplary embodiments of the present invention can be implemented in hardware or a combination of hardware and software. The software may be stored in a volatile or non-volatile memory device like a ROM irrespective of whether data is deletable or rewritable, in a memory like a RAM, a memory chip, a device, or an integrated circuit, or in a storage medium to which data can be recorded optically or magnetically and from which data can be read by a machine (e.g. a computer), such as a Compact Disc (CD), a Digital Versatile Disc (DVD), a magnetic disk, or a magnetic tape. Further, a memory that can be included in the mobile device is an example of a non-transitory machine-readable storage medium suitable for storing a program or programs including commands to implement the exemplary embodiments of the present invention. Accordingly, exemplary embodiments of the present invention include a program having a code for implementing the apparatuses or methods defined by the claims and a storage medium readable by a machine that stores the program. The program can be transferred electronically through a medium such as a communication signal transmitted via a wired or wireless connection, which and the equivalents of which are included in the exemplary embodiments of the present invention.

The mobile device can receive the program from a program providing device connected by cable or wirelessly and store it. The program providing device may include a memory for storing a program including commands to implement the exemplary embodiments of the present invention and information required for the exemplary embodiments of the present invention, a communication module for communicating with the mobile device by wire or wirelessly, and a controller for transmitting the program to the mobile device automatically or upon request of the mobile device.

While the invention has been shown and described with reference to certain exemplary embodiments thereof, it will be understood by those skilled in the art that various changes in form and details may be made therein without departing from the spirit and scope of the invention as defined by the following claims and their equivalents.

## Claims

1. A method for providing recommended items based on a context awareness result in a mobile device, the method comprising:
determining whether an event satisfying at least one predetermined condition has been generated;
generating, upon generation of an event satisfying the at least one predetermined condition, recommended items customized to the event; and
displaying a first window in an area according to a predetermined layout, the first window including the recommended items and a notification indicating that the items are recommended according to a context of the event generation.

2. The method of claim 1, wherein the determination comprises determining whether the event has been generated by checking at least one of conditions including a predetermined time, a predetermined location, reception of sensor data, and execution of content.

3. The method of claim 1 or 2, wherein the recommended items include at least one of an application, a media, a task, regional information, state information about the mobile device, and information about an acquaintance.

4. The method of one of claim 1 to 3, further comprising:
generating customized recommended items based on a user profile; and
displaying a second window including the user profile-based customized recommended items.

5. The method of one of claim 1 to 4, wherein the second window is displayed in the area according to the predetermined layout and upon generation of the event, the second window is displayed following the first window.

6. The method of one of claim 1 to 5, further comprising, upon generation of two or more events satisfying the at least one predetermined condition, displaying a plurality of windows for the two or more events successively in an order of latest to earliest; and
upon receipt of a scroll input, scrolling the plurality of windows.

7. The method of one of claim 1 to 6, wherein the generation of recommended items customized to the event comprises searching for an application available through a detected external device using sensor data indicating the detection of the external device.

8. The method of one of claim 1 to 7, wherein the generation of recommended items customized to the event comprises, if at least one of conditions being a predetermined time and a predetermined location is satisfied, generating a list of recommended applications related to the predetermined time or location and displaying of the list of recommended applications.

9. A mobile device for providing recommended items based on a context awareness result, the mobile device comprising:
a memory configured to store at least one predetermined condition for use in determining whether an event has been generated;
a controller configured to, upon generation of an event satisfying the at least one condition, generate recommended items customized to the event and control to display a first window in an area according to a predetermined layout, the first window including the recommended items and a notification indicating that the items are recommended according to a context of the event generation; and
a display configured to display the first window.

10. The mobile device of claim 9, wherein the controller is configured to determine whether the event has been generated by checking at least one of conditions including a predetermined time, a predetermined location, reception of sensor data, and execution of content.

11. The mobile device of claim 9 or 10, wherein the recommended items include at least one of an application, a media, a task, regional information, state information about the mobile device, and information about an acquaintance.

12. The mobile device of one of claim 9 to 11, wherein the controller is configured to generate customized recommended items based on a user profile, to control to display a second window including the user profile-based customized recommended items, to control to display the second window in the area according to the predetermined layout and upon generation of the event, and to control to display the second window following the first window.

13. The mobile device of one of claim 9 to 12, wherein, if a plurality of windows is to be displayed in the area according to the predetermined layout, the controller is configured to control to display the plurality of windows successively in an order of latest to earliest.

14. The mobile device of one of claim 9 to 13, wherein the controller is configured to receive sensor data indicating detection of an external device through a sensor module, to search for an application available through the detected external device among a plurality of applications stored in a memory, and to control to display the first window including the detected application on the display.

15. The mobile device of one of claim 9 to 14, wherein, if at least one of conditions being a predetermined time and a predetermined location is satisfied, the controller is configured to generate a list of recommended applications related to the predetermined time or location and to control to display the list of recommended applications.
